# EUROPÄISCHE PATENTSCHRIFT

(11) **EP 2 142 469 B1**
(45) Veröffentlichungstag und Bekanntmachung des Hinweises auf die Patenterteilung: **23.11.2011**
(21) Anmeldenummer: 08735314.0
(22) Anmeldetag: 14.04.2008
(51) Int. Cl.: C01B 7/04, C01B 7/07, C01B 7/075

(54) **PROZESS ZUR HERSTELLUNG VON CHLOR AUS HCL**
PROCESS FOR PRODUCING CHLORINE FROM HCl
PROCÉDÉ DE PRODUCTION DE CHLORE À PARTIR DE HCL

(30) Priorität: 26.04.2007 DE 102007020148
(43) Veröffentlichungstag der Anmeldung: 13.01.2010
(73) Patentinhaber: Bayer MaterialScience AG, 51368 Leverkusen (DE)
(72) Erfinder: BRETTSCHNEIDER, Ole, 10711 Berlin (DE); WERNER, Knud, 47800 Krefeld (DE); WANG, Jun, 40883 Ratingen (DE); WELZ, Carsten, 51379 Leverkusen (DE); CONRAD, Annette, 40223 Düsseldorf (DE); KLATT, Karsten-Ulrich, 51381 Leverkusen (DE)
(86) Internationale Anmeldenummer: PCT/EP2008/003109
(87) Internationale Veröffentlichungsnummer: WO 2008/131872

(56) Entgegenhaltungen:
- EP-A- 0 518 553
- WO-A-2004/037718
- WO-A-2005/014470
- WO-A-2006/089877
- DE-A1- 19 535 716

## Beschreibung

Die vorliegende Erfindung betrifft ein Verfahren zur Herstellung von Chlor durch eine katalysierte Gasphasenoxidation von Chlorwasserstoff mit einem Sauerstoff enthaltenden Gasstrom.

Das von Deacon 1868 entwickelte Verfahren der katalytischen Chlorwasserstoffoxidation mit Sauerstoff in einer exothermen Gleichgewichtsreaktion stand am Anfang der technischen Chlorchemic. Durch die Chloralkelielektrolyse wurde das Deacon-Verfahren jedoch stark in den Hintergrund gedrängt. Nahezu die gesamte Produktion von Chlor erfolgte durch Elektrolyse wässriger Kochsalzlösungen. Die Attraktivität des Deacon-Verfahrens nimmt jedoch in jüngster Zeit wieder zu, da der weltweite Chlorbedarf stärker wächst als die Nachfrage nach Natronlauge, ein Koppelprodukt der Elektrolyse. Dieser Entwicklung kommt das Verfahren zur Herstellung von Chlor durch Oxidation von Chlorwasserstoff entgegen, das von der Natronlaugenherstellung entkoppelt ist. Darüber hinaus ist das Vorprodukt Chlorwasserstoff einfach zugänglich; es fällt in großen Mengen beispielsweise bei Phosgenierungsreaktionen, etwa bei der Isocyanat-Herstellung, als Koppelprodukt an.

WO 2006/089877 A offenbart ein Verfahren zur Herstellung von Chlor aus Chlorwasserstoff, bei dem ein gereinigter chlorwasserstoffhaltiger Strom, ein neuer Sauerstoff enthaltender Strom und ein zurückgeführter Sauerstoff enthaltender Strom in eine Oxidationszone, in der die katalytische Oxidation von Chlorwasserstoff zu Chlor stattfindet, eingeleitet werden, und bei dem ein Produktstrom enthaltend Chlor, Wasser, Sauerstoff, Kohlendioxid und gegebenenfalls Inertgase erhalten wird. Nach Abtrennung von Wasser und Chlorwasserstoff als Salzsäure, Trocknung, Verdichtung und teilweise Verflüssigung werden ein Flüssigkeitsstrom enthaltend Chlor und ein Gasstrom erhalten. Zumindest ein Teil des Gasstromes wird in eine Membrantrenneinheit zur Bildung eines Stromes enthaltend hauptsächlich Sauerstoff eingespeist, und der nicht umgesetzten Sauerstoff enthaltende Strom wird in die Oxidationszone zurückgeleitet. Die Schrift erwähnt weder die Verwendung von Messgeräten, noch Einstellvorrichtungen oder Kontrolleinheiten. WO 2006/089877 A weist auch nicht auf die Sicherstellung der Anlage oder auf die Einhaltung der Anforderungen des Anlagenbetriebs hin.

DE 195 35 716 A1, WO 2005/014470 A, WO 2004/037718 A und EP 0 518 553 A beziehen sich auch auf Verfahren zur Herstellung von Chlor aus Chlorwasserstoff. Jedoch beschreibt keines dieser Dokumente Messgeräte, Einstellungsvorrichtungen oder Kontrolleinheiten; auch geben diese Dokumente dem Fachmann keine Hinweise, um zu einer detaillierten Kontrollstrategie zu gelangen.

Aufgabe der Erfindung ist es, eine Optimierung der Prozessabläufe beim Deacon-Verfahren bereitzustellen.

Der erfindungsgemäße Prozess zur Herstellung von Chlor aus HCl besteht aus den folgenden Prozessschritten:
a) Kompression des HCl Gasfeeds (Strom 1) in einer HCl Kompressionsstufe auf einen erhöhten Druck;
b) Reinigen des komprimierten HCl Feedgases (Strom 2) in einer HCl Gasreinigungsstufe;
c) Vereinigen eines Sauerstoff enthaltenden Rückstromes (Strom 16) mit dem gereinigten HCl Gasstrom (Strom 3) zu einem Eduktstrom 4;
d) Einleiten des vereinigten Eduktstromes (Strom 4) in die Oxidationszone, in der HCl und Sauerstoff zu einem Teil zu Chlor und Wasser ungesetzt werden und ein Produktstrom 5, enthaltend Chlor, Sauerstoff, HCl und Wasser erhalten wird;
e) Einleiten des Produktstromes 5 in eine Prozessstufe 33 zur Abscheidung von HCl und Wasser in Form von wässriger Salzsäure (Strom 6) aus dem Produktstrom;
f) Einleitung des von HCl und Wasser zumindest teilweise befreiten Produktstromes 7 in eine Prozessstufe zur weiteren Trocknung mit Reduzierung des Wasseranteils im Gasstrom;
g) Einleitung des aus der Trocknungsstufe erhaltenen getrockneten Gasstromes 8 in eine Chlorkompressionsstufe zur Druckerhöhung des Gasstromes 8 unter Bildung eines komprimierten Gasstromes 9;
h) Einleiten des komprimierten Gasstromes 9 in eine Stufe zur zumindest teilweisen Abtrennung des im Gas 9 enthaltenen Chlors (Strom 10) unter Bildung eines Gasstroms 11, der nicht umgesetzten Sauerstoff enthält;
i) Ausschlensung eines Teilstromes 12 des Gasstromes 11;
j) Einleitung des ausgeschleusten Gasstromes 12 in eine Abgasbehandlungsstufe;
k) Vereinigung des nach Ausschlensung eines Teilstromes des Gasstromes 11 verbleiben den Gases mit einem frischen Sauerstoff enthaltenden Strom 15 zu einem Strom 16;
l) Rückführung des Stromes 16 in den Prozessschritt c).

Das erfindungsgemäße Verfahren ist **dadurch gekennzeichnet, dass**
A) justierbare Durchflusseinstellvorrichtungen in den Leitungen für den gereinigten Chlorwasserstoffstrom, den nach der Chlorabtrennung verbleibenden Gasstrom, den Gasteilstrom, der in die Abgasbehandlungsstufe eingeleitet wird und den frischen Sauerstoff enthaltenden Strom vorgesehen werden,
B) Druckmessgeräte hinter oder innerhalb des Prozessschrittes zur Reinigung des Chlorwasserstoffstroms, in der Chlorabtrennung sowie in der Leitung des nach der Chlorabtrennung verbleibenden Stroms hinter der in diesem Strom vorzusehenden Durchflusseinstellvorrichtung vorgesehen werden,
C) Mengenstrommessgeräte in den Leitungen für den gereinigten Chlorwasserstoffstrom, den nach der Chlorabtrennung verbleibenden Gasstrom nach Ausschleusung eines Teilstroms zur Abgasbehandlung und den frischen Sauerstoff enthaltenden Strom vorgesehen werden,
D) ein Gerät zur Messung der Sauerstoffkonzentration im nach der Chlorabtrennung verbleibenden Gasstrom nach Ausschleusung eines Teilstroms zur Abgasbehandlung vorgesehen wird,
E) beide Kompressionsstufen d.h. die Chlorwasserstoffkompression und die Chlorkompression in ihrer Leistung einstellbar vorgesehen werden,
und zur Sicherstellung eines vorteilhaften Anlagenbetriebs
F) durch eine erste Kontrolleinheit der gereinigte Chlorwasserstoffstrom durch Einstellung der Durchflusseinstellvorrichtung in diesem Strom auf einem konstanten Mengenstrom gehalten wird,
G) mittels einer zweiten Kontrolleinheit der in oder hinter der Prozessstufe zur Reinigung des komprimierten Chlorwasserstoffstroms gemessene Druck durch Einstellung der Chlorwasserstoff-Kompressionsstufe auf einem konstanten Wert gehalten wird,
H) mittels einer dritten Kontrolleinheit der frischen Sauerstoff enthaltende Strom durch Einstellung der Durchflusseinstellvorrichtung in dem frischen Sauerstoff enthaltenden Strom auf ein konstantes Mengenstrom-Verhältnis zum gereinigten Chlorwasserstoffstrom gehalten wird,
I) mittels einer vierten Kontrolleinheit das oben genannte Mengenstrom-Verhältnis zwischen dem gereinigten Chlorwasserstoffstrom und dem Sauerstoff enthaltenden Strom so eingestellt wird, dass der Sauerstoffgehalt, der im nach der Chlorabtrennung verbleibenden Gasstrom nach Ausschleusung eines Teilstroms zur Abgasbehandlung gemessen wird, konstant gehalten wird,
J) mittels einer fünften Kontrolleinheit der im nach der Chlorabtrennung verbleibenden Gasstrom hinter der in diesem Strom vorzusehenden Durchflusseinstellvorrichtung gemessene Druck über die Einstellung der Durchflusseinstellvorrichtung für den in die Abgasbehandlung eingeleiteten Teilstrom auf einem konstanten Wert gehalten wird,
K) mittels einer sechsten Kontrolleinrichtung der nach der Chlorabtrennung verbleibende Gasstrom nach Ausschleusung eines Teilstroms zur Abgasbehandlung durch Einstellung der Chlorkompressionsstufe auf einem konstanten Wert gehalten wird, und
L) mittels einer siebten Kontrolleinrichtung der in der Chlorabtrennung gemessene Druck durch Einstellung der Durchflusseinstellvorrichtung im nach der Chlorabtrennung verbleibenden Gasstrom auf einem konstanten Wert gehalten wird.

Bei dem erfindungsgemäßen Prozess handelt es sich um einen Kreislaufprozess, der erhöhte Anforderungen an die Betriebsweise stellt.

Eine bevorzugte Ausführung des Verfahrens ist **dadurch gekennzeichnet, dass** der Gasstrom (11) oder das nach der Ausschleusung eines Teilstroms (12) des Gastromes (11) verbleibende Gas in eine Prozessstufe (39) zur Gaswäsche eingeleitet wird.

So muss der Strom in die Oxidationszone 32 geregelt werden, um die Ausprägung von Hot Spots bei der Reaktion kontrollieren zu können. Dies geschieht am einfachsten, indem die beiden Ströme 3 und 16 konstant gehalten werden. Da der Sauerstoff enthaltende Strom 16 aber aus dem Prozess rückgeführt wird, entsteht eine Rückkoppelung, die zu unerwünschten Schwingungen im durch ihn gebildeten Kreislauf führen kann. Deshalb muss hier eine über übliche Regelstrategien hinausführende Art der Regelung angewendet werden.

Weiterhin müssen unerwünschte Nebenkomponenten aus der Rückführung abgetrennt werden, da diese ansonsten im Prozess akkumulieren würden. Da die Nebenkomponenten nicht in konstanter Menge anfallen, führt dies zu einer weiteren Schwankung im Rückstrom 16, der ebenfalls einen Regelbedarf nach sich zieht.

Auch der Druck im Prozess ist eine Schlüsselgröße. So schwankt z.B. bei Druckänderungen die Dichte der Gasströme, so dass sich die Strömungsgeschwindigkeiten in für den Betrieb des Prozesses unerwünschte Bereiche verlagern können. Da auch der Reaktionsumsatz vom Druck abhängt, würden durch Druckänderungen der Umsatz und damit die Zusammensetzungen der Ströme schwanken. Der Prozess ist also so zu regeln, dass der Druck möglichst konstant ist. Im Bereich der Chlorabtrennstufe h) muss der Druck noch zusätzlich angehoben werden, um eine Abtrennung des Chlors durch Kondensation zu ermöglichen. Um hier Schwankungen zu vermeiden, die sich direkt auf die Kondensationsleistung auswirken würden, muss dieser erhöhte Druck ebenfalls möglichst konstant sein.

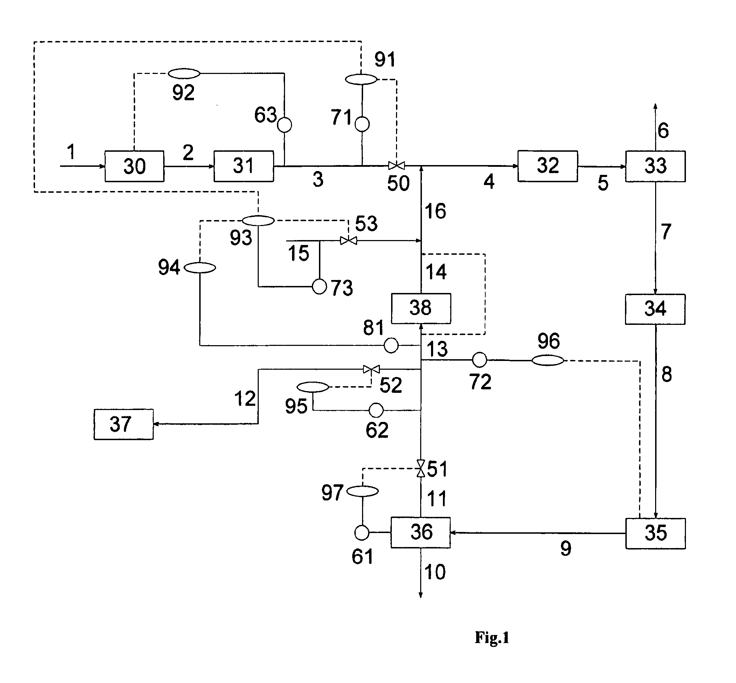

Hier haben entsprechende Untersuchungen gezeigt, dass ein vorteilhafter Betrieb dadurch erreicht wird, dass geeignete, justierbare Durchflusseinstellvorrichtungen in den Strömen 3, 11, 12 und 15 vorgesehen werden. Gleichzeitig sind entsprechende Druckmessgeräte in der Chlorabtrennstufe 36 sowie in Strom 11 (hinter der in Strom 11 vorzusehenden Durchflusseinstellvorrichtung) sowie hinter oder innerhalb der HCl Gasreinigung b) vorzusehen. Ferner sind Mengenstrommessgeräte in den Strömen 3, 13 und 15 vorzusehen sowie ein Gerät zur Messung der Sauerstoffkonzentration in Strom 13 (wie in Figur 1 dargestellt) oder in Strom 11, 12, 14 bzw. 16 (nicht in Figur 1 dargestellt). Darüber hinaus sind die beiden Kompressionsstufen (HCl Kompression und Chlorkompression) in ihrer Leistung einstellbar vorzusehen.

Ein vorteilhafter Betrieb des Prozesses wird nun dadurch erreicht, dass durch eine erste Kontrolleinheit der in Strom 3 gemessene Mengenstrom HCl durch Einstellung der Durchflusseinstellvorrichtung in Strom 3 auf einem konstanten Wert gehalten wird.

Mit Hilfe einer zweiten Kontrolleinheit ist der in oder hinter der HCl Gasreinigung gemessene Druck durch Einstellung des HCl Kompressors auf einem konstanten Wert zu halten.

Mit Hilfe einer dritten Kontrolleinheit ist der in Strom 15 gemessene Mengenstrom durch Einstellung der Durchflusseinstellvorrichtung in Strom 15 auf ein konstantes Verhältnis zu dem in Strom 3 gemessenen Mengenstrom zu halten.

Mit Hilfe einer vierten Kontrolleinheit ist das oben genannte Verhältnis zwischen HCl-Strom 3 und Sauerstoff enthaltendem Strom 16 so fein einzustellen, dass der in Strom 13 (oder auch in Strom 11, 12, 14 bzw. 16) gemessene Sauerstoffgehalt konstant gehalten wird.

Mit Hilfe einer fünften Kontrolleinheit ist der in Strom 11 hinter der in 11 vorzusehenden Durchflusseinstellvorrichtung gemessene Druck über die Einstellung der in Strom 12 vorzusehenden Durchflusseinstellvorrichtung auf einem konstanten Wert zu halten.

Mit Hilfe einer sechsten Kontrolleinrichtung ist der in Strom 13 gemessene Mengenstrom durch Einstellung des Chlorkompressors auf einem konstanten Wert zu halten.

Mit Hilfe einer siebten Kontrolleinrichtung wird der in der Chlorabtrennung gemessene Druck durch Einstellung der in Strom 11 vorzusehenden Durchflusseinstellvorrichtung auf einem konstanten Wert gehalten.

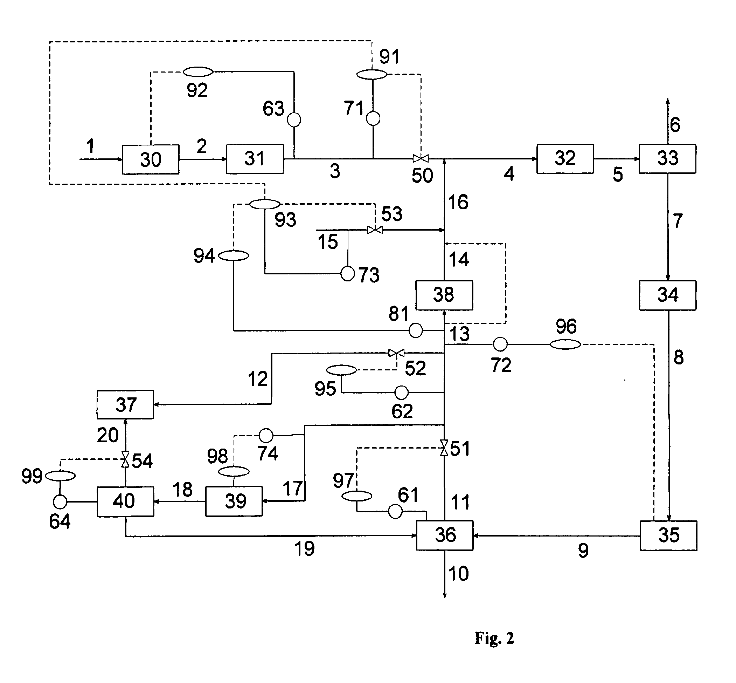

Eine besondere Ausführungsform des erfindungsgemäßen Prozesses ist in Figur 2 dargestellt und weist die folgenden Prozessschritte auf:
1. Kompression des HCl Gasfeeds (Strom 1) in einer HCl Kompressionsstufe auf einen erhöhten Druck;
2. Reinigen des komprimierten HCl Feedgases (Strom 2) in einer HCl Gasreinigungsstufe;
3. Vereinigen eines Sauerstoff enthaltenden Rückstromes (Strom 16) mit dem gereinigten HCl Feedgasstrom (Strom 3) zu einem Eduktstrom 4;
4. Einleiten des vereinigten Eduktstrom (Strom 4) in die Oxidationszone, in der HCl und Sauerstoff zu einem Teil zu Chlor und Wasser umgesetzt werden und ein Produktstrom 5, enthaltend Chlor, Sauerstoff, HCl und Wasser erhalten wird;
5. Einleiten des Produktstromes 5 in eine Prozessstufe 33 zur Abscheidung von HCl und Wasser in Form von wässriger Salzsäure (Strom 6) aus dem Produktstrom;
6. Einleitung des von HCl und Wasser zumindest teilweise befreiten Produktstromes 7 in eine Trocknungssstufe zur weiteren Trocknung mit Reduzierung des Wasseranteils im Gasstrom;
7. Einleitung des aus der Trocknungsstufe erhaltenen getrockneten Gasstromes 8 in eine Chlorkompressionsstufe zur Druckerhöhung des Reaktionsgasstromes unter Bildung eines komprimierten Gasstromes 9;
8. Einleiten des komprimierten Gasstromes 9 in eine Abtrennstufe zur zumindest teilweisen Abtrennung des im Gas enthaltenen Chlors (Strom 10) unter Bildung eines Gasstroms 11, der nicht umgesetzten Sauerstoff enthält;
9. Einleiten des nach der Chlorabtrennung verbleibenden Gasstromes 11 in eine Prozessstufe zur Gaswäsche zur Bildung eines gereinigten Stroms 14, wobei zwischen der Chlorabtrennung und der Gaswäsche ein Teilstrom 17 des Gasstromes 11 ausgeschleust wird.
10. Einleitung des ausgeschleusten Gasstromes 17 in eine Druckerhöhungsstufe, in der der Druck erhöht wird unter Bildung eines komprimierten Gasstroms 18;
11. Einleiten des komprimierten Gasstroms 18 in eine Cl₂ Rückgewinnungsstufe, in der das in Strom 18 enthaltene Chlor destillativ bei niedriger Temperatur abgetrennt und als Rückstrom 19 der Cl₂-Abtrennung zugeleitet wird und der verbleibende Gasstrom 20 einer Abgasbehandlung zugeleitet wird;
12. Abtrennung eines Teilstromes 12 aus Strom 11 und Einleitung von Strom 12 in die bereits in 11. genannte Abgasbehandlung oder wahlweise vorherige Vereinigung mit Strom 20;
13. Vereinigung des aus der Gaswaschstufe kommenden Stromes 14 mit einem frischen Sauerstoff enthaltenden Strom 15 unter Bildung eines Rückstromes 16
14. Vereinigung des Rückstromes 16 mit dem Strom 3 wie in 3. beschrieben.

Hierbei ist insbesondere noch vorgesehen, dass eine justierbare Durchflusseinstellvorrichtung 54 in der Leitung des nach der Chlor-Rückgewinnungsstufe 40 verbleibenden Gasstroms 20 vorgesehen wird;
ein Mengenstrommessgerät 74 im weiteren Teilstrom 17 vorgesehen wird, der in die Druckerhöhungsstufe 39 geleitet wird;
ein Druckmessgerät 64 in oder hinter der Chlor-Rückgewinnungsstufe 40, vor der Durchflusseinstellvorrichtung 54 für den nach dieser Stufe verbleibenden Gasstrom 20, vorgesehen wird;
die Druckerhöhungseinheit 39 in ihrer Leistung einstellbar vorgesehen wird;
mittels einer achten Kontrolleinrichtung 98 der weitere Teilstrom 17 durch Einstellung der Leistung der Druckerhöhungseinheit 39 so eingestellt wird, dass der weiter oben beschriebene Teilstrom 12 zur Abgasbehandlung 37 minimiert wird, und
durch eine neunte Kontrolleinrichtung 99 der in oder hinter der Chlor-Rückgewinnungsstufe 40 gemessene Druck konstant gehalten wird.

Bei dieser besonderen Ausführungsform des neuen Prozesses haben entsprechende Untersuchungen gezeigt, dass ein vorteilhafter Betrieb dadurch erreicht wird, dass geeignete, justierbare Durchflusseinstellvorrichtungen in den Strömen 3, 11, 12, 15 und 20 vorgesehen werden. Gleichzeitig sind entsprechende Druckmessgeräte in der Chlorabtrennung 36 sowie in Strom 11 (hinter der in Strom 11 vorzusehenden Durchflusseinstellvorrichtung) sowie hinter oder innerhalb der HCl Gasreinigung sowie in der Cl₂ Rückgewinnung vorzusehen. Ferner sind Mengenstrommessgeräte in den Strömen 3, 13, 15 und 17 vorzusehen sowie ein Gerät zur Messung der Sauerstoffkonzentration in Strom 13. Darüber hinaus sind die Kompressionsstufen (HCl Kompression, Chlorkompression und Druckerhöhungsstufe) in ihrer Leistung einstellbar vorzusehen.

Ein vorteilhafter Betrieb des Prozesses wird nun dadurch erreicht, dass durch eine erste Kontrolleinheit der in Strom 3 gemessene Mengenstrom HCl durch Einstellung der Durchflusseinstellvorrichtung in Strom 3 auf einem konstanten Wert gehalten wird.

Mit Hilfe einer zweiten Kontrolleinheit ist der in oder hinter der HCl Gasreinigung gemessene Druck durch Einstellung des HCl Kompressors auf einem konstanten Wert zu halten.

Mit Hilfe einer dritten Kontrolleinheit ist der in Strom 15 gemessene Mengenstrom durch Einstellung der Durchflusseinstellvorrichtung in Strom 15 auf ein konstantes Verhältnis zu dem in Strom 3 gemessenen Mengenstrom zu halten.

Mit Hilfe einer vierten Kontrolleinheit ist das oben genannte Verhältnis zwischen Strom 3 und Strom 15 so fein einzustellen, dass der in Strom 13 gemessenen Sauerstoffgehalt konstant gehalten wird.

Mit Hilfe einer fünften Kontrolleinheit ist der in Strom 11 hinter der in 11 vorzusehenden Durchflusseinstellvorrichtung gemessene Druck über die Einstellung der in Strom 12 vorzusehenden Durchflusseinstellvorrichtung auf einem konstanten Wert zu halten.

Mit Hilfe einer sechsten Kontrolleinrichtung ist der in Strom 13 gemessene Mengenstrom durch Einstellung des Chlorkompressors auf einem konstanten Wert zu halten.

Mit Hilfe einer siebten Kontrolleinrichtung wird der in der Chlorabtrennung gemessene Druck durch Einstellung der in Strom 11 vorzusehenden Durchflusseinstellvorrichtung auf einem konstanten Wert gehalten.

Mit Hilfe einer achten Kontrolleinrichtung ist der in Strom 17 gemessene Mengenstrom durch Einstellung der Druckerhöhungsstufe so einzustellen, dass der Strom 12 minimiert wird.

Mit Hilfe einer neunten Kontrolleinrichtung wird der in der Cl₂ Rückgewinnungsstufe gemessene Druck durch Einstellung der in Strom 20 vorzusehenden Durchflusseinstellvorrichtung auf einem konstanten Wert gehalten.

Die Gaswäsche entfällt, falls keine nennenswerten Mengen von Katalysator deaktivierenden Komponenten im Gasstrom enthalten sind.

Eine bevorzugte Ausführung des Verfahrens ist **dadurch gekennzeichnet, dass** der durch die zweite Kontrolleinheit (92) eingestellte Druck 2 bis 20 bar beträgt,
der durch die vierte Kontrolleinheit (94) eingestellte Sauerstoffgehalt 10 bis 90 Vol.-% beträgt,
der durch die fünfte Kontrolleinheit (95) eingestellte Druck 2 bis 20 bar beträgt,
und der durch die siebte Kontrolleinheit (97) eingestellte Druck 6 bis 30 bar beträgt.

Bevorzugt wird in der Oxidationszone das als Deacon-Prozess bekannte katalytische Verfahren eingesetzt. Hierbei wird Chlorwasserstoff mit Sauerstoff in einer exothermen Gleichgewichtsreaktion zu Chlor oxidiert, wobei Wasserdampf anfällt. Die Reaktionstemperatur beträgt üblicherweise 150 bis 500°C, der übliche Reaktionsdruck beträgt 1 bis 25 bar. Da es sich um eine Gleichgewichtsreaktion handelt, ist es zweckmäßig, bei möglichst niedrigen Temperaturen zu arbeiten, bei denen der Katalysator noch eine ausreichende Aktivität aufweist. Ferner ist es zweckmäßig, Sauerstoff in überstöchiometrischen Mengen zum Chlorwasserstoff einzusetzen. Üblich ist beispielsweise ein zweibis vierfacher Sauerstoff-Überschuss. Da keine Selektivitätsverluste zu befürchten sind, kann es wirtschaftlich vorteilhaft sein, bei relativ hohem Druck und dementsprechend bei gegenüber Normaldruck längerer Verweilzeit zu arbeiten.

Geeignete bevorzugte Katalysatoren für das Deacon-Verfahren enthalten Rutheniumoxid, Rutheniumchlorid oder andere Rutheniumverbindungen auf Siliziumdioxid, Aluminiumoxid, Titandioxid oder Zirkondioxid als Träger. Geeignete Katalysatoren können beispielsweise durch Aufbringen von Rutheniumchlorid auf den Träger und anschließendes Trocknen oder Trocknen und Calcinieren erhalten werden. Geeignete Katalysatoren können ergänzend zu oder an Stelle einer Rutheniumverbindung auch Verbindungen anderer Edelmetalle, beispielsweise Gold, Palladium, Platin, Osmium, Iridium, Silber, Kupfer oder Rhenium enthalten. Geeignete Katalysatoren können ferner Chrom(III)oxid enthalten.

Die katalytische Chlorwasserstoff-Oxidation kann adiabatisch oder bevorzugt isotherm oder annähernd isotherm, diskontinuierlich, bevorzugt aber kontinuierlich als Fließ- oder Festbettverfahren, bevorzugt als Festbettverfahren, besonders bevorzugt in Rohrbündelreaktoren an Heterogenkatalysatoren bei einer Reaktortemperatur von 180 bis 500°C, bevorzugt 200 bis 400°C, besonders bevorzugt 220 bis 350°C und einem Druck von 1 bis 25 bar (1000 bis 25000 hPa), bevorzugt 1,2 bis 20 bar, besonders bevorzugt 1,5 bis 17 bar und insbesondere 2,0 bis 15 bar durchgeführt werden.

Übliche Reaktionsapparate, in denen die katalytische Chlorwasserstoff-Oxidation durchgeführt wird, sind Festbett- oder Wirbelbettreaktoren. Die katalytische Chlorwasserstoff-Oxidation kann bevorzugt auch mehrstufig durchgeführt werden.

Bei der isothermen oder annähernd isothermen Fahrweise können auch mehrere, also 2 bis 10, bevorzugt 2 bis 6, besonders bevorzugt 2 bis 5, insbesondere 2 bis 3, in Reihe geschaltete Reaktoren mit zusätzlicher Zwischenkühlung eingesetzt werden. Der Chlorwasserstoff kann entweder vollständig zusammen mit dem Sauerstoff vor dem ersten Reaktor oder über die verschiedenen Reaktoren verteilt zugegeben werden. Diese Reihenschaltung einzelner Reaktoren kann auch in einem Apparat zusammengeführt werden.

Eine weitere bevorzugte Ausführungsform einer für das Verfahren geeigneten Vorrichtung besteht darin, dass man eine strukturierte Katalysatorschüttung einsetzt, bei der die Katalysatoraktivität in Strömungsrichtung ansteigt. Eine solche Strukturierung der Katalysatorschüttung kann durch unterschiedliche Tränkung der Katalysatorträger mit Aktivmasse oder durch unterschiedliche Verdünnung des Katalysators mit einem Inertmaterial erfolgen. Als Inertmaterial können beispielsweise Ringe, Zylinder oder Kugeln aus Titandioxid, Zirkondioxid oder deren Gemischen, Aluminiumoxid, Steatit, Keramik, Glas, Graphit, Edelstahl oder Nickellegierungen eingesetzt werden. Beim bevorzugten Einsatz von Katalysatorformkörpern sollte das Inertmaterial bevorzugt ähnliche äußere Abmessungen haben.

Als Katalysatorformkörper eignen sich Formkörper mit beliebigen Formen, bevorzugt sind Tabletten, Ringe, Zylinder, Sterne, Wagenräder oder Kugeln, besonders bevorzugt sind Ringe, Zylinder oder Sternstränge als Form.

Als Heterogenkatalysatoren eignen sich insbesondere Rutheniumverbindungen oder Kupferverbindungen auf Trägermaterialen, die auch dotiert sein können, bevorzugt sind gegebenenfalls dotierte Rutheniumkatalysatoren. Als Trägermaterialen eignen sich beispielsweise Siliziumdioxid, Graphit, Titandioxid mit Rutil- oder Anatas-Struktur, Zirkondioxid, Aluminiumoxid oder deren Gemische, bevorzugt Titandioxid, Zirkondioxid, Aluminiumoxid oder deren Gemische, besonders bevorzugt γ- oder δ-Aluminiumoxid oder deren Gemische.

Die Kupfer- bzw. die Rutheniumträgerkatalysatoren können beispielsweise durch Tränkung des Trägermaterials mit wässrigen Lösungen von CuCl₂ bzw. RuCl₃ und gegebenenfalls eines Promotors zur Dotierung, bevorzugt in Form ihrer Chloride, erhalten werden. Die Formgebung des Katalysators kann nach oder bevorzugt vor der Tränkung des Trägermaterials erfolgen.

Zur Dotierung der Katalysatoren eignen sich als Promotoren Alkalimetalle wie Lithium, Natrium, Kalium, Rubidium und Cäsium, bevorzugt Lithium, Natrium und Kalium, besonders bevorzugt Kalium, Erdalkalimetalle wie Magnesium, Calcium, Strontium und Barium, bevorzugt Magnesium und Calcium, besonders bevorzugt Magnesium, Seltenerdmetalle wie Scandium, Yttrium, Lanthan, Cer, Praseodym und Neodym, bevorzugt Scandium, Yttrium, Lanthan und Cer, besonders bevorzugt Lanthan und Cer, oder deren Gemische.

Die Formkörper können anschließend bei einer Temperatur von 100 bis 400°C, bevorzugt 100 bis 300°C beispielsweise unter einer Stickstoff-, Argon- oder Luftatmosphäre getrocknet und gegebenenfalls calciniert werden. Bevorzugt werden die Formkörper zunächst bei 100 bis 150°C getrocknet und anschließend bei 200 bis 400°C calciniert.

Der Umsatz an Chlorwasserstoff im einfachen Durchgang kann bevorzugt auf 15 bis 95 %, bevorzugt 40 bis 90%, besonders bevorzugt 50 bis 90% begrenzt werden. Nicht umgesetzter Chlorwasserstoff kann nach Abtrennung teilweise oder vollständig in die katalytische Chlorwasserstoff-Oxidation zurückgeführt werden. Das Volumenverhältnis von Chlorwasserstoff zu Sauerstoff am Reaktoreintritt beträgt bevorzugt 1:1 bis 20:1, bevorzugt 1:1 bis 8:1, besonders bevorzugt 1:1 bis 5:1.

Als Katalysator wird bevorzugt ein Rutheniumkatalysator, insbesondere ein Katalysator auf Basis von Rutheniumchlorid als katalytische Komponente und Zinnoxid als Trägermaterial eingesetzt.

### Beispiele

### Beispiel 1

In diesem Beispiel wird der vorteilhafte Betrieb des erfindungsgemäßen Prozesses unter Verwendung der Figur 1 beschrieben.

Ein HCl-Gasstrom 1 mit konstantem Eingangsdruck wird in einem Kompressor 30 verdichtet. Dieser Kompressor 30 besitzt zur Leistungsregelung eine Umblaseleitung (nicht gezeichnet) von der Druckauf die Saugseite. Die Umblaseleitung ist mit einem Regelventil versehen.

Anschließend wird der komprimierte Gasstrom 2 in einer Gasreinigungsstufe 31 zunächst soweit abgekühlt, dass organische Verunreinigungen auskondensieren bzw. ausfrieren. Danach wird er durch ein Aktivkohlebett geführt, in dem die letzten organischen Verunreinigungen entfernt werden. Der Druck hinter dem Aktivkohlebett wird gemessen. Über einen Regelkreis, der aus der Druckmessung 63, dem Regelventil in der Umblaseleitung des HCl-Kompressors 30 und der Kontrolleinheit 92 besteht, wird dieser Druck auf 6 bar gehalten. Hinter dem Druck wird ebenfalls der HCl-Mengenstrom gemessen. Ein dahinter angebrachtes weiteres Regelventil 50 bildet mit der Mengenstrommessung 71 und Kontrolleinheit 91 zusammen einen weiteren Regelkreis, mit dem der gereinigte HCl-Gasstrom 3 auf 10 t/h eingestellt wird. Beim Durchströmen des Regelventils fällt der Druck auf 5,5 bar ab.

Danach wird der gereinigte HCl-Gasstrom 3 mit einem Sauerstoff enthaltenden Rückstrom 16 von 14 t/h zum Eduktstrom 4 vereinigt. Der Rückstrom 16 enthält 30 Vol.-% Sauerstoff.

Beim anschließenden Durchströmen einer Reaktionszone 32 werden durch geeignete Wahl von Temperatur und Verweilzeit 87% der zugeführten HCl an einem heterogenen Ru-Katalysator zu Cl₂ und H₂O umgesetzt.

Nicht umgesetzte HCl und der größte Teil des erzeugten Wassers werden in einem Abscheideprozess 33 als 30%-ige Salzsäure 6 vom Produktgas 5 abgetrennt.

Der verbleibende Gasstrom 7 von 21 t/h wird in der nächsten Stufe 34 mit Schwefelsäure in Kontakt gebracht und so getrocknet.

In einem Chlorkompressor 35 erfolgt eine Verdichtung des getrockneten Gasstroms 8 auf 12 bar. Der Chlorkompressor 35 ist genauso wie der HCl-Kompressor 30 mit einer Umblaseleitung mit Regelventil ausgestattet (nicht gezeichnet).

In einer sich anschließenden Destillationskolonne 36 wird der getrocknete und komprimierte Gasstrom 9 von Komponenten wie O₂, N₂ und CO₂ (Strom 11) befreit. Das im Sumpf dieser Kolonne anfallende Chlor 10 wird flüssig abgezogen. Die abgetrennten Komponenten werden am Kopf der Kolonne gasförmig entnommen. In der Kopfleitung befindet sich eine Druckmessung 61 und dahinter ein Regelventil 51, die zusammen mit der siebten Kontrolleinrichtung 97 einen Regelkreis bilden, mit dem der Druck in der Kopfleitung auf 12 bar gehalten wird.

Hinter dem Regelventil 51 wird ein Teilstrom 12 von 0,4 t/h ausgeschleust und in eine Abgasbehandlung 37 geführt, in der restliches Chlorgas entfernt wird. Der ausgeschleuste Mengenstrom 12 wird über ein Regelventil 52 eingestellt. Dazu ist vor der Ausschleuseleitung eine weitere Druckmessung 62 mit einer fünften Kontrolleinrichtung 95 installiert; beide bilden zusammen mit dem Regelventil 52 einen Regelkreis. Das Regelventil 52 lässt nun soviel Gas passieren, dass ein Druck von 5,6 bar gehalten wird.

Nach der Teilstrom-Ausschleusung wird der Mengenstrom des verbleibenden Gases 13 aus der Kopfleitung der Destillationskolonne gemessen (Messgerät 72). Mit einem weiteren Messgerät 81 wird der O₂-Gehalt gemessen. Die Mengenstrommessung 72 und das Regelventil in der Umblaseleitung des Chlorkompressors bilden mit der Kontrolleinrichtung 96 einen Regelkreis, mit dem der Mengenstrom des nach der Teilstrom-Ausschleusung verbleibenden Gases 13 auf 12 t/h eingestellt wird. Der Einstellwert folgt dem zugeführten HCl-Gasstrom, so dass bei dessen Erhöhung auch eine Erhöhung des hier geregelten Mengenstroms erfolgt.

Da das verbleibende Gas 13 in den Prozess zurückgeführt wird, sollte es erst von Komponenten befreit werden, die den Katalysator in der Reaktionszone 32 deaktivieren können. Dazu wird eine Gaswäsche 38 vorgesehen, aus der der gereinigte Gasstrom 14 austritt. Enthält das verbleibende Gas 13 keine den Katalysator deaktivierenden Komponenten, kann es auch an der Gaswäsche 38 vorbei geführt werden (gestrichelt gezeichnet).

Hinter der Gaswäsche 38 wird frischer Sauerstoff 15 als Ersatz für den im Prozess verbrauchten Sauerstoff zugeführt. Der Mengenstrom wird mit dem Durchflussmessgerät 73 gemessen. Hinter der Messung liegt ein Regelventil 53, das zusammen mit der Mengenstrommessung 73 und der dritten Kontrolleinheit 93 einen Regelkreis bildet. Mit diesem Regelkreis wird, wieder dem zugeführten HCl-Gasstrom 3 folgend, die Menge an frischem Sauerstoff 15 auf 2 t/h eingestellt. Über die oben beschriebene Messung des O₂-Gehalts und die Kontrolleinheit 94 wird diese Einstellung korrigierend nachgeführt.

### Beispiel 2

In diesem Beispiel wird anhand von Figur 2 eine bevorzugte Betriebsweise des erfindungsgemäßen Prozesses mit zusätzlicher Chlorrückgewinnung beschrieben. Ein HCl-Gasstrom 1 mit konstantem Eingangsdruck wird in einem Kompressor 30 verdichtet. Dieser Kompressor 30 besitzt zur Leistungsregelung eine Umblaseleitung (nicht gezeichnet) von der Druck- auf die Saugseite. Die Umblaseleitung ist mit einem Regelventil versehen.

Anschließend wird der komprimierte Gasstrom 2 in einer Gasreinigungsstufe 31 zunächst soweit abgekühlt, dass organische Verunreinigungen auskondensieren bzw. ausfrieren. Danach wird er durch ein Aktivkohlebett geführt, in dem die letzten organischen Verunreinigungen entfernt werden. Der Druck hinter dem Aktivkohlebett wird gemessen. Über einen Regelkreis, der aus der Druckmessung 63, dem Regelventil in der Umblaseleitung des HCl-Kompressors 30 und der Kontrolleinheit 92 besteht, wird dieser Druck auf 6 bar gehalten. Hinter dem Druck wird ebenfalls der HCl-Mengenstrom gemessen. Ein dahinter angebrachtes weiteres Regelventil 50 bildet mit der Mengenstrommessung 71 und Kontrolleinheit 91 zusammen einen weiteren Regelkreis, mit dem der gereinigte HCl-Gasstrom auf 10 t/h eingestellt wird. Beim Durchströmen des Regelventils fällt der Druck auf den Druck im Kreislauf ab.

Danach wird der gereinigte HCl-Gasstrom 3 mit einem Sauerstoff enthaltenden Rückstrom 16 von 14 t/h zum Eduktstrom 4 vereinigt. Der Rückstrom 16 enthält 30 Vol.-% Sauerstoff.

Beim anschließenden Durchströmen einer Reaktionszone 32 werden durch geeignete Wahl von Temperatur und Verweilzeit 87% der zugerführten HCl an einem heterogenen Ru-Katalysator zu Cl₂ und H₂O umgesetzt.

Nicht umgesetzte HCl und der größte Teil des erzeugten Wassers werden in einem Abscheideprozess 33 als 30%-ige Salzsäure 6 vom Produktgas 5 abgetrennt.

Der verbleibende Gasstrom 7 von 21 t/h wird in der nächsten Stufe 34 mit Schwefelsäure in Kontakt gebracht und so getrocknet.

In einem Chlorkompressor 35 erfolgt eine Verdichtung des getrockneten Gasstroms 8 auf 12 bar. Der Chlorkompressor 35 ist genauso wie der HCl-Kompressor 30 mit einer Umblaseleitung mit Regelventil ausgestattet (nicht gezeichnet).

In einer sich anschließenden Destillationskolonne 36 wird der getrocknete und komprimierte Gasstrom 9 von Komponenten wie O₂, N₂ und CO₂ (Strom 11) befreit. Das im Sumpf dieser Kolonne anfallende Chlor 10 wird flüssig abgezogen. Die abgetrennten Komponenten werden am Kopf der Kolonne gasförmig entnommen. In der Kopfleitung befindet sich eine Druckmessung 61 und dahinter ein Regelventil 51, die zusammen mit der siebten Kontrolleinrichtung 97 einen Regelkreis bilden, mit dem der Druck in der Kopfleitung auf 12 bar gehalten wird.

Hinter dem Regelventil 51 wird ein Teilstrom 12 von 0,1 t/h ausgeschleust und in eine Abgasbehandlung 37 geführt, in der restliches Chlorgas entfernt wird. Der ausgeschleuste Mengenstrom 12 wird über ein Regelventil 52 eingestellt. Dazu ist vor der Ausschleuseleitung eine weitere Druckmessung 62 mit einer fünften Kontrolleinrichtung 95 installiert; beide bilden zusammen mit dem Regelventil 52 einen Regelkreis. Das Regelventil 52 lässt nun soviel Gas passieren, dass ein Druck von 5,6 bar gehalten wird. Ein weiterer Teilstrom 17 von 0,3 t/h wird zur zusätzlichen Chlorrückgewinnung vor dem Teilstrom 12 abgezogen und dem Kompressor 39 zugeführt. Der Kompressor 39 besitzt zur Leistungsregelung eine Umblaseleitung (nicht gezeichnet) von der Druckauf die Saugseite. Die Umblaseleitung ist mit einem Regelventil versehen. Danach wird der komprimierte, weitere Teilstrom 18 einer Destillationskolonne 40 zugeführt, in der bei verminderter Temperatur verflüssigtes Chlor 19 abgetrennt und in die Chlorabtrennung 36 zurückgeführt wird. Der Mengenstrom des Teilstroms 17 wird mit Hilfe des Durchflussmessgeräts 74 gemessen und durch einen Regelkreis, bestehend aus diesem Durchflussmessgerät, der Kontrolleinheit 98 und dem Regelventil in der Umblaseleitung des Kompressors 39 konstant gehalten. In die Leitung des Gasstroms 20 aus dem Kopf der Kolonne 40 ist ein Regelventil 54 geschaltet, das über die Druckmessung 64 und die Kontrolleinheit 99 den Druck in der Destillationskolonne konstant hält. Der so gereinigte Teilstrom 20 wird der Abgasbehandlung 37 zugeführt.

Nach der Ausschleusung der Teilströme 12 und 17 wird der Mengenstrom des verbleibenden Gases 13 aus der Kopfleitung der Destillationskolonne mit dem Durchflussmessgerät 72 gemessen. Mit einem weiteren Messgerät 81 wird der 02-Gehalt gemessen. Die Mengenstrommessung, das Regelventil in der Umblaseleitung (nicht gezeichnet) des Chlorkompressors und die Kontrolleinheit 96 bilden einen Regelkreis, mit dem der Mengenstrom des nach der Teilstrom-Ausschleusung verbleibenden Gases 13 auf 12 t/h eingestellt wird. Der Einstellwert folgt dem zugeführten HCl-Gasstrom, so dass bei dessen Erhöhung auch eine Erhöhung des hier geregelten Mengenstroms erfolgt.

Da das verbleibende Gas 13 in den Prozess zurückgeführt wird, sollte es von Komponenten befreit werden, die den Katalysator in der Reaktionszone deaktivieren. Dazu wird eine Gaswäsche 38 vorgesehen, aus der der gereinigte Gasstrom 14 austritt. Enthält das verbleibende Gas 13 keine den Katalysator deaktivierenden Komponenten, kann es auch an der Gaswäsche 38 vorbei geführt werden (Alternative in Fig. 2 gestrichelt gezeichnet).

Hinter der Gaswäsche 38 wird frischer Sauerstoff 15 als Ersatz für den im Prozess verbrauchten Sauerstoff zugeführt. Der Mengenstrom wird gemessen (Messgerät 73). Hinter der Messung liegt ein Regelventil 53, das zusammen mit der Mengenstrommessung 73 und der dritten Kontrolleinheit 93 einen Regelkreis bildet. Mit diesem Regelkreis wird, dem zugeführten HCl-Gasstrom 3 folgend, die Menge an frischem Sauerstoff 15 auf 2 t/h eingestellt. Über die oben beschriebene Messung des O₂-Gehalts und die Kontrolleinheit 94 wird diese Einstellung korrigierend nachgeführt.

### Beispiel 3 (Vergleich)

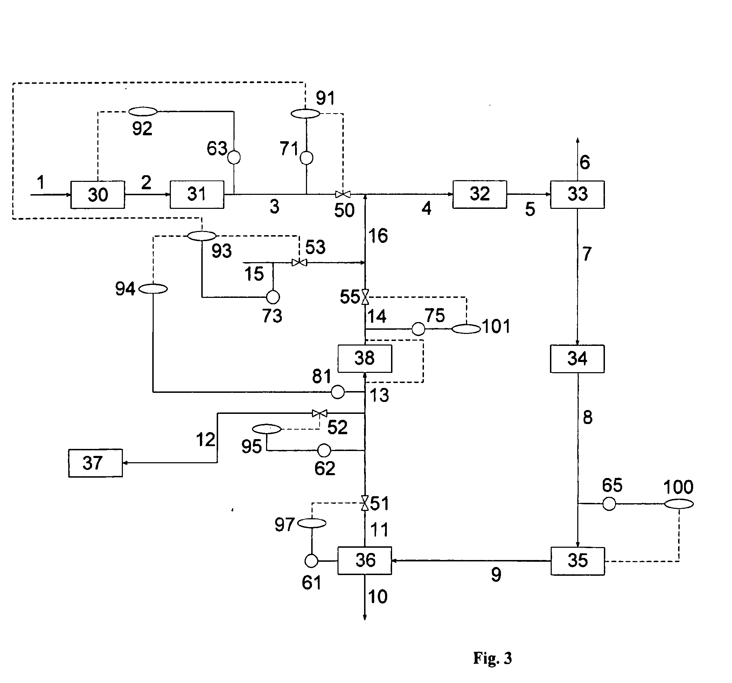

In diesem Beispiel wird anhand von Figur 3 eine Betriebsweise beschrieben, die aus den üblichen Regelstrategien für Prozesse ohne Kreislauffahrweise abgeleitet werden kann, jedoch gegenüber der Betriebsweise nach Beispiel 1 zusätzlichen Aufwand bedeutet. Ein HCl-Gasstrom 1 mit konstantem Eingangsdruck wird in einem Kompressor 30 verdichtet. Dieser Kompressor 30 besitzt zur Leistungsregelung eine Umblaseleitung (nicht gezeichnet) von der Druck- auf die Saugseite. Die Umblaseleitung ist mit einem Regelventil versehen.

Anschließend wird der komprimierte Gasstrom 2 in einer Gasreinigungsstufe 31 zunächst soweit abgekühlt, dass organische Verunreinigungen auskondensieren bzw. ausfrieren. Danach wird er durch ein Aktivkohlebett geführt, in dem die letzten organischen Verunreinigungen entfernt werden. Der Druck hinter dem Aktivkohlebett wird gemessen. Über einen Regelkreis, der aus der Druckmessung 63, dem Regelventil in der Umblaseleitung des HCl-Kompressors 30 und der Kontrolleinheit 92 besteht, wird dieser Druck auf 6 bar gehalten. Hinter dem Druck wird ebenfalls der HCl-Mengenstrom gemessen. Ein dahinter angebrachtes weiteres Regelventil 50 bildet mit der Mengenstrommessung 71 und Kontrolleinheit 91 zusammen einen weiteren Regelkreis, mit dem der gereinigte HCl-Gasstrom auf 10 t/h eingestellt wird. Beim Durchströmen des Regelventils fällt der Druck auf den Druck im Kreislauf ab.

Danach wird der gereinigte HCl-Gasstrom 3 mit einem Sauerstoff enthaltenden Rückstrom 16 von 14 t/h zum Eduktstrom 4 vereinigt. Der Rückstrom 16 enthält 30 Vol.-% Sauerstoff.

Beim anschließenden Durchströmen einer Reaktionszone 32 werden durch geeignete Wahl von Temperatur und Verweilzeit 87% der zugeführten HCl an einem heterogenen Ru-Katalysator zu Cl₂ und H₂O umgesetzt.

Nicht umgesetzte HCl und der größte Teil des erzeugten Wassers werden in einem Abscheideprozess 33 als 30%-ige Salzsäure 6 vom Produktgas 5 abgetrennt.

Der verbleibende Gasstrom 7 von 21 t/h wird in der nächsten Stufe 34 mit Schwefelsäure in Kontakt gebracht und so getrocknet.

In einem Chlorkompressor 35 erfolgt eine Verdichtung des getrockneten Gasstroms 8 auf 12 bar. Der Chlorkompressor 35 ist genauso wie der HCl-Kompressor 30 mit einer Umblaseleitung mit Regelventil ausgestattet (nicht gezeichnet). Vor dem Chlorkompressor befindet sich eine Druckmessung 65, die zusammen mit dem Regelventil in der Umblaseleitung des Chlorkompressors und der Kontrolleinrichtung 100 einen Regelkreis bildet. Durch diese Regelung wird der Druck vor dem Chlorkompressor auf 4,5 bar gehalten.

In einer sich anschließenden Destillationskolonne 36 wird der getrocknete und komprimierte Gasstrom 9 von Komponenten wie O₂, N₂ und CO₂ (Strom 11) befreit. Das im Sumpf dieser Kolonne anfallende Chlor 10 wird flüssig abgezogen. Die abgetrennten Komponenten werden am Kopf der Kolonne gasförmig entnommen. In der Kopfleitung befindet sich eine Druckmessung 61 und dahinter ein Regelventil 51, die zusammen mit der Kontrolleinrichtung 97 einen Regelkreis bilden, mit dem der Druck in der Kopfleitung auf 12 bar gehalten wird.

Hinter dem Regelventil 51 wird ein Teilstrom 12 von 0,4 t/h ausgeschleust und in eine Abgasbehandlung 37 geführt, in der restliches Chlorgas entfernt wird. Der ausgeschleuste Mengenstrom 12 wird über ein Regelventil 52 eingestellt. Dazu ist vor der Ausschleuseleitung eine weitere Druckmessung 62 mit einer Kontrolleinrichtung 95 installiert; beide bilden zusammen dem Regelventil 52 einen Regelkreis. Das Regelventil 52 lässt nun soviel Gas passieren, dass ein Druck von 6,5 bar gehalten wird.

Nach der Teilstrom-Ausschleusung wird im Mengenstrom des verbleibenden Gases 13 mit einem Messgerät 81 der O₂-Gehalt gemessen.

Da das verbleibende Gas 13 in den Prozess zurückgeführt wird, sollte es von Komponenten befreit werden, die den Katalysator in der Reaktionszone deaktivieren. Dazu wird eine Gaswäsche 38 vorgesehen, aus der der gereinigte Gasstrom 14 austritt. Enthält das verbleibende Gas 13 keine den Katalysator deaktivierenden Komponenten, kann es auch an der Gaswäsche 38 vorbei geführt werden (gestrichelt gezeichnet).

Hinter der Gaswäsche 38 wird frischer Sauerstoff 15 als Ersatz für den im Prozess verbrauchten Sauerstoff zugeführt. Der Mengenstrom wird gemessen (Messgerät 73). Hinter der Messung liegt ein Regelventil 53, das zusammen mit der Mengenstrommessung 73 und der Kontrolleinheit 93 einen Regelkreis bildet. Mit diesem Regelkreis wird, dem zugeführten HCl-Gasstrom 3 folgend, die Menge an frischem Sauerstoff 15 auf 2 t/h eingestellt. Über die oben beschriebene Messung des 02-Gehalts und die Kontrolleinheit 94 wird diese Einstellung korrigierend nachgeführt.

Um jetzt noch den Strom 14, der in den Prozess rückgeführt wird, regeln zu können, muss eine zusätzliche Regelarmatur vorgesehen werden, die in Beispiel 1 nicht erforderlich ist und einen zusätzlichen Druckabfall generiert. Dazu wird hinter der Gaswäsche der Mengenstrom des Gasstroms 14 mit einem Mengenstrommessgerät 75 gemessen. Weiterhin wird ein Regelventil 55 in den Strom 14 eingesetzt. Dieses bildet zusammen mit der Mengenstrommessung 75 des Gasstroms 14 und der Kontrolleinheit 101 einen Regelkreis. Mit diesem Regelkreis wird der gemessene Mengenstrom auf 12 t/h eingestellt. Der Einstellwert folgt dem zugeführten HCl-Gasstrom, so dass bei dessen Erhöhung auch eine Erhöhung des hier geregelten Mengenstroms erfolgt. Im Regelventil 55 fällt dabei der Druck auf etwa 5,5 bar ab.

Dieser zusätzliche Regelkreis regelt den Mengenstrom nur unmittelbar, da z.B. bei der Anforderung eines größeren Mengenstroms das Regelventil 55 öffnet und der Druck dahinter so lange steigt, bis die Kontrolleinheit 100 zur Vordruckregelung des Chlorkompressors 35 dessen Umblaseleitung ausreichend geschlossen und damit den Kreislaufstrom erhöht hat. Dies führt zu einer unnötigen Verzögerung und damit zu einer schlechteren Regelqualität. Außerdem führt der ansteigende Druck vor der Reaktionszone 32 zu einer unnötigen Schwankung in der Reaktionszone, was die Regelqualität noch weiter verschlechtert.

## Patentansprüche

1. Verfahren zur Herstellung von Chlor durch eine katalysierte Gasphasenoxidation von Chlorwasserstoff mit einem Sauerstoff enthaltenden Gasstrom, bestehend aus den Prozessschritten:
a) Kompression des Chlorwasserstoffstroms (1) in einer HCl Kompressionsstufe (30) auf einen erhöhten Druck;
b) Reinigen des komprimierten Chlorwasserstoffstroms (2) in einer HCl Gasreinigungsstufe (31);
c) Vereinigen eines Sauerstoff enthaltenden Rückstromes (16) mit dem gereinigten Chlorwasserstoffstrom (3) zu einem Eduktstrom (4);
d) Einleiten des Eduktstroms (4) in die Oxidationszone (32), in der Chlorwasserstoff und Sauerstoff zu einem Teil zu Chlor und Wasser umgesetzt werden und ein Produktstrom (5), enthaltend Chlor, Sauerstoff, Chlorwasserstoff und Wasser erhalten wird;
e) Einleiten des Produktstromes (5) in eine Prozessstufe (33) zur Abscheidung von Chlorwasserstoff und Wasser in Form von wässriger Salzsäure (6) aus dem Produktstrom (5);
f) Einleitung des von Chlorwasserstoff und Wasser zumindest teilweise befreiten Produktstromes (7) in eine Trocknungssstufe (34) zur weiteren Trocknung mit Reduzierung des Wasseranteils im Produktstrom (7);
g) Einleitung des aus der Trocknungsstufe (34) erhaltenen getrockneten Gasstromes (8) in eine Chlorkompressionsstufe (35) zur Druckerhöhung des Gasstromes (8) unter Bildung eines komprimierten Gasstromes (9);
h) Einleiten des komprimierten Gasstromes (9) in eine Abtrennstufe (36) zur zumindest teilweisen Abtrennung des im Gas (9) enthaltenen Chlors (10) unter Bildung eines Gasstroms (11), der nicht umgesetzten Sauerstoff enthält;
i) Ausschlensung eines Teilstromes (12) des Gasstromes (11)
j) Einleitung des ausgeschleusten Teilstroms (12) des Gases in eine Abgasbehandlungsstufe (37);
k) Vereinigung des nach Ausschlensung eines Teilstromes (12) des Gasstromes (11) verbleibenden Gases mit einem frischen Sauerstoff enthaltenden Strom (15) unter Bildung eines Sauerstoff enthaltenden Rückstromes (16);
l) Rückführung des Rückstromes (16) zur Vereinigung dieses Stromes (16) mit dem gereinigten Chlorwaaserstoffstrom in den Prozessschritt c),
**dadurch gekennzeichnet, dass**
A) justierbare Durchflusseinstellvorrichtungen (50, 51, 52, 53) in den Leitungen für den gereinigten Chlorwasserstoffstrom (3), den nach der Chlorabtrennung verbleibenden Gasstrom (11), den Gasteilstrom (12), der in die Abgasbehandlungsstufe eingeleitet wird und im frischen Sauerstoff enthaltenden Strom (15) vorgesehen werden,
B) Druckmessgeräte (63, 61, 62) hinter oder innerhalb des Prozessschrittes (31) zur Reinigung des Chlorwasserstoffstroms, in der Chlorabtrennung (36) sowie in der Leitung des nach der Chlorabtrennung verbleibenden Stroms (11) hinter der in diesem Strom vorzuschenden Durchflusseinstellvorrichtung (51) vorgesehen werden,
C) Mengenstrommessgeräte (71, 72, 73) in den Leitungen für den gereinigten Chlorwasserstoffstrom (3), den hinter der Chlorabtrennung, nach Ausschleusung eines Teilstroms (12) zur Abgasbehandlung, verbleibenden Gasstrom (13) und den frischen Sauerstoff enthaltenden Strom (15) vorgesehen werden,
D) ein Gerät (81) zur Messung der Sauerstoffkonzentration im hinter der Chlorabtrennung, nach Ausschleusung eines Teilstroms (12) zur Abgasbehandlung, verbleibenden Gasstrom (13) vorgesechen wird,
E) beide Kompressionsstufen, d. h. die Chlorwasserstoffkompression (30) und die Chlorkompression (35), in ihrer Leistung einstellbar vorgesehen werden,
und zur Sicherstellung eines vorteilhaften Anlagenbetriebs
F) durch eine erste Kontrolleinheit (91) der gereinigte Chlorwasserstoffstrom (3) durch Einstellung der Durchflusseinstellvorrichtung (50) in diesem Strom (3) auf einem konstanten Mengenstrom gehalten wird,
G) mittels einer zweiten Kontrolleinheit (92) der in oder hinter der Prozessstufe (31) zur Reinigung des komprimierten Chlorwasserstoffstroms gemessene Druck durch Einstellung der Chlorwasserstoff-Kompression (30) auf einem konstanten Wert gehalten wird,
H) mittels einer dritten Kontrolleinheit (93) der Sauerstoff enthaltende Strom (15) durch Einstellung der Durchflusseinstellvorrichtung (53) in dem frischen Sauerstoff enthaltenden Strom (15) auf ein konstantes Mengenstrom-Verhältnis zum gereinigten Chlorwasserstoffstrom (3) gehalten wird,
I) mittels einer vierten Kontrolleinheit (94) das oben genannte Mengenstrom-Verhältnis zwischen dem gereinigten Chlorwasserstoffstrom (3) und dem Sauerstoff enthaltenden Strom (15) so fein eingestellt wird, dass der Sauerstoffgehalt, der im hinter der Chlorabtrennung, nach Ausschleusung eines Teilstroms (12) zur Abgasbehandlung, verbleibenden Gasstrom (13) gemessen wird, konstant gehalten wird,
J) mittels einer fünften Kontrolleinheit (95) der im nach der Chlorabtrennung (36) verbleibenden Gasstrom (11) hinter der in diesem Strom vorzusehenden Durchflusseinstellvorrichtung (51) gemessene Druck über die Einstellung der Durchflusseinstellvorrichtung (52) für den in die Abgasbehandlung (37) eingeleiteten Teilstrom (12) auf einem konstanten Wert gehalten wird,
K) mittels einer sechsten Kontrolleinrichtung (96) der Mengenstrom des hinter der Chlorabtrennung, nach Ausschleusung eines Teilstroms (12) zur Abgasbehandlung, verbleibenden Gasstroms (13) durch Einstellung der Chlorkompressionsstufe (35) auf einem konstanten Wert gehalten wird, und
L) mittels einer siebten Kontrolleinrichtung (97) der in der Chlorabtrennung (36) gemessene Druck durch Einstellung der Durchflusseinstellvorrichtung (51) im nach der Chlorabtrennung (36) verbleibenden Gasstrom (11) auf einem konstanten Wert gehalten wird.

2. Verfahren nach Anspruch 1, **dadurch gekennzeichnet, dass**
der Gasstrom (11) oder das nach der Ausschleusung eines Teilstroms (12) des Gasstromes (11) verbleibende Gas in eine Prozessstufe (38) zur Gaswäsche eingeleitet wird.

3. Verfahren nach Anspruch 1 oder 2, **dadurch gekennzeichnet, dass** aus dem nach der Chlorabtrennung (36) verbleibenden Gasstrom (11) ein weiterer Teilstrom (17) ausgeschleust wird, der in einer Druckerhöhungsstufe (39) komprimiert und danach in eine Chlor-Rückgewinnungsstufe (40) geführt wird, in der das in diesem komprimierten Teilstrom (18) enthaltene Chlor destillativ bei niedriger Temperatur abgetrennt und als Rückstrom (19) der Chlorabtrennung (36) zugeleitet und der verbleibende Gasstrom (20) der Abgasbehandlung (37) zugeleitet wird;
eine justierbare Durchflusseinstellvorrichtung (54) in der Leitung des nach der Chlor-Rückgewinnungsstufe (40) verbleibenden Gasstroms (20) vorgesehen wird;
ein Mengenstrommessgerät (74) im weiteren Teilstrom (17) vorgesehen wird, der in die Druckerhöhungsstufe (39) geleitet wird;
ein Druckmessgerät (64) in oder hinter der Chlor-Rückgewinnungsstufe (40), vor der Durchflusseinstellvorrichtung (54) für den nach dieser Stufe verbleibenden Gasstrom (20), vorgesehen wird;
die Druckerhöhungseinheit (39) in ihrer Leistung einstellbar vorgesehen wird; mittels einer achten Kontrolleinrichtung (98) der weitere Teilstrom (17) durch Einstellung der Leistung der Druckerhöhungseinheit (39) so eingestellt wird, dass der weiter oben beschriebene Teilstrom (12) zur Abgasbehandlung (37) minimiert wird, und
durch eine neunte Kontrolleinrichtung (99) der in oder hinter der Chlor-Rückgewinnungsstufe (40) gemessene Druck durch Einstellung der Durchflusseinstellvorrichtung 54 konstant gehalten wird.

4. Verfahren nach einem der Ansprüche 1 bis 3, **dadurch gekennzeichnet, dass**
die Sauerstoffkonzentration im nach der Chlorabtrennung verbleibenden Gasstrom (11), oder im zur Abgasbehandlungsstufe ausgeschleusten Teilstrom (12), oder im zur Druckerhöhungsstufe ausgeschleusten weiteren Teilstrom (17), oder im aus der Gaswaschstufe (38) kommenden Strom (14), oder im Strom (16) nach Vereinigung des Stroms (14) mit einem frischen Sauerstoff enthaltenden Strom (15), gemessen wird.

5. Verfahren nach einem der Ansprüche 1 bis 4, **dadurch gekennzeichnet, dass** der durch die zweite Kontrolleinheit (92) eingestellte Druck 2 bis 20 bar beträgt,
der durch die vierte Kontrolleinheit (94) eingestellte Sauerstoffgehalt 10 bis 90 Vol.-% beträgt,
der durch die fünfte Kontrolleinheit (95) eingestellte Druck 2 bis 20 bar beträgt,
und der durch die siebte Kontrolleinheit (97) eingestellte Druck 6 bis 30 bar beträgt.

6. Verfahren nach einem der Ansprüche 1 bis 5, **dadurch gekennzeichnet, dass** in der Oxidationsstufe (32) ein Rutheniumkatalysator, insbesondere ein Katalysator auf Basis von Rutheniumchlorid und Zinnoxid als Trägermaterial eingesetzt wird.

## Claims

1. Process for the production of chlorine by a catalysed gas phase oxidation of hydrogen chloride with an oxygen-containing gas stream, consisting of the process steps:
a) compressing the hydrogen chloride stream (1) in an HCl compression stage (30) to an elevated pressure;
b) purifying the compressed hydrogen chloride stream (2) in an HCl gas purification stage (31);
c) combining an oxygen-containing return stream (16) with the purified hydrogen chloride stream (3) to form a feedstock stream (4);
d) introducing the feedstock stream (4) into the oxidation zone (32), in which hydrogen chloride and oxygen are partially reacted to form chlorine and water and a product stream (5) containing chlorine, oxygen, hydrogen chloride and water is obtained;
e) introducing the product stream (5) into a process stage (33) for the separation of hydrogen chloride and water from the product stream (5) in the form of aqueous hydrochloric acid (6);
f) introducing the product stream (7), at least partially freed of hydrogen chloride and water, into a drying stage (34) for further drying with a reduction in the proportion of water in the product stream (7);
g) introducing the dried gas stream (8) obtained from the drying stage (34) into a chlorine compression stage (35) to increase the pressure of the gas stream (8) with the formation of a compressed gas stream (9);
h) introducing the compressed gas stream (9) into a separation stage (36) to at least partially separate off the chlorine (10) in the gas (9) to form a gas stream (11) which contains unconverted oxygen;
i) purging a bleed stream (12) of the gas stream (11);
j) introducing the purged bleed stream (12) of the gas into a waste gas treatment stage (37);
k) combining the gas remaining after purging a bleed stream (12) of the gas stream (11) with a fresh oxygen-containing stream (15) to form an oxygen-containing return stream (16);
l) returning the return stream (16) to combine this stream (16) with the purified hydrogen chloride stream into process step c),
**characterized in that**
A) adjustable flow rate setting devices (50, 51, 52, 53) are provided in the lines for the purified hydrogen chloride stream (3), the gas stream (11) remaining after chlorine removal, the gas bleed stream (12) which is introduced into the waste gas treatment stage and in the fresh oxygen-containing stream (15),
B) pressure measuring instruments (63, 61, 62) are provided downstream of or within the process step (31) for purifying the hydrogen chloride stream, in the chlorine removal (36) and also in the line of the stream (11) remaining after chlorine removal downstream of the flow rate setting device (51) to be provided in this stream,
C) volume flow measuring instruments (71, 72, 73) are provided in the lines for the purified hydrogen chloride stream (3), the gas stream (13) remaining downstream of the chlorine removal, after purging a bleed stream (12) for waste gas treatment, and the fresh oxygen-containing stream (15),
D) an instrument (81) for measuring the oxygen concentration is provided in the gas stream (13) remaining downstream of the chlorine removal, after purging a bleed stream (12) for waste gas treatment,
E) both compression stages, i.e. the hydrogen chloride compression (30) and the chlorine compression (35) are adjustable in their performance, and to ensure advantageous plant operation
F) a first control unit (91) is used to maintain the purified hydrogen chloride stream (3) at a constant volume flow rate by adjusting the flow rate setting device (50) in this stream (3),
G) a second control unit (92) is used to maintain the pressure measured in or downstream of the process state (31) for purifying the compressed hydrogen chloride stream at a constant value by adjusting the hydrogen chloride compression (30),
H) a third control unit (93) is used to maintain the oxygen-containing stream (15) at a constant volume flow ratio to the purified hydrogen chloride stream (3) by adjusting the flow rate setting device (53) in the fresh oxygen-containing stream (15),
I) a fourth control unit (94) is used to adjust the abovementioned volume flow ratio between the purified hydrogen chloride stream (3) and the oxygen-containing stream (15) so finely that the oxygen content measured in the gas stream (13) remaining downstream of the chlorine removal, after purging a bleed stream (12) for waste gas treatment is kept constant,
J) a fifth control unit (95) is used to maintain the pressure measured in the gas stream (11) remaining after the chlorine removal (36) downstream of the flow rate setting device (51) provided in this stream at a constant value via adjustment of the flow rate setting device (52) for the bleed stream (12) introduced into the waste gas treatment (37),
K) a sixth control means (96) is used to maintain the volume stream of the gas stream (13) remaining downstream of the chlorine removal, after purging a bleed stream (12) for waste gas treatment at a constant value by adjusting the chlorine compression stage (35), and
L) a seventh control means (97) is used to maintain the pressure measured in the chlorine removal (36) at a constant value by adjusting the flow rate setting device (51) in the gas stream (11) remaining after the chlorine removal (36).

2. Process according to Claim 1, **characterized in that**
the gas stream (11) or the gas remaining after purging a bleed stream (12) of the gas stream (11) is introduced into a process stage (38) for gas scrubbing.

3. Process according to Claim 1 or 2, **characterized in that**
the gas stream (11) remaining after the chlorine removal (36) has purged from it a further bleed stream (17) which is compressed in a pressure elevation stage (39) and thereafter led into a chlorine recovery stage (40), in which the chlorine in this compressed bleed stream (18) is distillatively separated off at low temperature and directed as return stream (19) to the chlorine removal (36) and the remaining gas stream (20) is directed to the waste gas treatment (37);
an adjustable flow rate setting device (54) is provided in the line of the gas stream (20) remaining after the chlorine recovery stage (40);
a volume flow measuring instrument (74) is provided in the further bleed stream (17) which is introduced into the pressure elevation stage (39);
a pressure measuring instrument (64) is provided in or downstream of the chlorine recovery stage (40) upstream of the flow rate setting device (54) for the gas stream (20) remaining after this stage;
the pressure elevation unit (39) is adjustable in its performance;
an eighth control means (98) is used to adjust the further bleed stream (17) such that the above-described bleed stream (12) to the waste gas treatment (37) is minimized by adjusting the performance of the pressure elevation unit (39), and
a ninth control means (99) is used to keep the pressure measured in or downstream of the chlorine recovery stage (40) constant by adjusting the flow rate setting device (54).

4. Process according to any one of Claims 1 to 3, **characterized in that**
the oxygen concentration is measured in the gas stream (11) remaining after the chlorine removal, or in the bleed stream (12) purged to the waste gas treatment stage, or in the further bleed stream (17) purged to the pressure elevation stage, or in the stream (14) coming from the gas scrubbing stage (38), or in the stream (16) after combining the stream (14) with a fresh oxygen-containing stream (15).

5. Process according to any one of Claims 1 to 4, **characterized in that** the pressure set by the second control unit (92) is in the range from 2 to 20 bar,
the oxygen content set by the fourth control unit (94) is in the range from 10% to 90% by volume,
the pressure set by the fifth control unit (95) is in the range from 2 to 20 bar,
and the pressure set by the seventh control unit (97) is in the range from 6 to 30 bar.

6. Process according to any one of Claims 1 to 5, **characterized in that** the oxidation stage (32) utilizes a ruthenium catalyst, more particularly a catalyst based on ruthenium chloride and tin oxide as carrier material.

## Revendications

1. Procédé de fabrication de chlore par une oxydation en phase gazeuse catalysée de chlorure d'hydrogène avec un courant gazeux contenant de l'oxygène, constitué par les étapes de procédé suivantes :
a) la compression du courant de chlorure d'hydrogène (1) dans une étape de compression d'HCl (30) à une pression élevée ;
b) la purification du courant de chlorure d'hydrogène comprimé (2) dans une étape de purification du gaz HCl (31) ;
c) le rassemblement d'un courant recyclé contenant de l'oxygène (16) avec le courant de chlorure d'hydrogène purifié (3) pour former un courant de réactifs (4) ;
d) l'introduction du courant de réactifs (4) dans la zone d'oxydation (32), dans laquelle d'une part le chlorure d'hydrogène et l'oxygène sont transformés en chlore et eau, et un courant de produits (5) contenant du chlore, de l'oxygène, du chlorure d'hydrogène et de l'eau est obtenu ;
e) l'introduction du courant de produits (5) dans une étape de procédé (33) pour la séparation du chlorure d'hydrogène et de l'eau sous la forme d'acide chlorhydrique aqueux (6) du courant de produits (5) ;
f) l'introduction du courant de produits (7) débarrassé au moins en partie du chlorure d'hydrogène et de l'eau dans une étape de séchage (34) pour le séchage supplémentaire avec réduction de la proportion d'eau dans le courant de produits (7) ;
g) l'introduction du courant gazeux sec (8) obtenu à partir de l'étape de séchage (34) dans une étape de compression du chlore (35) pour augmenter la pression du courant gazeux (8) en formant un courant gazeux comprimé (9) ;
h) l'introduction du courant gazeux comprimé (9) dans une étape de séparation (36) pour la séparation au moins partielle du chlore (10) contenu dans le gaz (9) pour former un courant gazeux (11) qui contient de l'oxygène non réagi ;
i) le déchargement d'un courant partiel (12) du courant gazeux (11) ;
j) l'introduction du courant partiel déchargé (12) du gaz dans une étape de traitement du gaz d'échappement (37) ;
k) le rassemblement du gaz restant après le déchargement d'un courant partiel (12) du courant gazeux (11) avec un courant (15) contenant de l'oxygène frais pour former un courant recyclé contenant de l'oxygène (16) ;
l) le recyclage du courant recyclé (16) pour le rassemblement de ce courant (16) avec le courant de chlorure d'hydrogène purifié dans l'étape de procédé c),
**caractérisé en ce que**
A) des dispositifs de réglage du débit ajustables (50, 51, 52, 53) sont prévus dans les conduites pour le courant de chlorure d'hydrogène purifié (3), le courant gazeux (11) restant après la séparation du chlore, le courant gazeux partiel (12) qui est introduit dans l'étape de traitement du gaz d'échappement et le courant contenant de l'oxygène frais (15),
B) des appareils de mesure de la pression (63, 61, 62) sont prévus après ou dans l'étape de procédé (31) pour la purification du courant de chlorure d'hydrogène, dans la séparation du chlore (36), ainsi que dans la conduite du courant (11) restant après la séparation du chlore après le dispositif de réglage du débit (51) à prévoir dans ce courant,
C) des appareils de mesure du débit massique (71, 72, 73) sont prévus dans les conduites pour le courant de chlorure d'hydrogène purifié (3), le courant gazeux (13) restant après la séparation du chlore, après le déchargement d'un courant partiel (12) pour le traitement du gaz d'échappement, et le courant contenant de l'oxygène frais (15),
D) un appareil (81) est prévu pour mesurer la concentration en oxygène dans le courant gazeux (13) restant après la séparation du chlore, après le déchargement d'un courant partiel (12) pour le traitement du gaz d'échappement,
E) les deux étapes de compression, c.-à-d. la compression du chlorure d'hydrogène (30) et la compression du chlore (35), sont prévues pour être réglables au regard de leur puissance,
et pour assurer une exploitation avantageuse de l'installation
F) le courant de chlorure d'hydrogène purifié (3) est maintenu à un débit massique constant par une première unité de contrôle (91) par réglage du dispositif de réglage du débit (50) dans ce courant (3),
G) la pression mesurée dans ou après l'étape de procédé (31) pour la purification du courant de chlorure d'hydrogène comprimé est maintenue à une valeur constante par une deuxième unité de contrôle (92) par réglage de la compression du chlorure d'hydrogène (30),
H) le courant contenant de l'oxygène (15) est maintenu à un rapport de débit massique constant par rapport au courant de chlorure d'hydrogène purifié (3) par une troisième unité de contrôle (93) par réglage du dispositif de réglage du débit (53) dans le courant (15) contenant de l'oxygène frais,
I) le rapport de débit massique susmentionné entre le courant de chlorure d'hydrogène purifié (3) et le courant contenant de l'oxygène (15) est réglé par une quatrième unité de contrôle (94) de manière à ce que la teneur en oxygène mesurée dans le courant gazeux (13) restant après la séparation du chlore, après le déchargement d'un courant partiel (12) pour le traitement du gaz d'échappement, soit maintenue constante,
J) la pression mesurée dans le courant gazeux (11) restant après la séparation du chlore (36) après le dispositif de réglage du débit (51) à prévoir dans ce courant est maintenue à une valeur constante par une cinquième unité de contrôle (95) par le réglage du dispositif de réglage du débit (52) pour le courant partiel (12) introduit dans le traitement du gaz d'échappement (37),
K) le débit massique du courant gazeux (13) restant après la séparation du chlore, après le déchargement d'un courant partiel (12) pour le traitement du gaz d'échappement, est maintenu à une valeur constante par un sixième dispositif de contrôle (96) par réglage de l'étape de compression du chlore (35), et
L) la pression mesurée dans la séparation du chlore (36) est maintenue à une valeur constante par un septième dispositif de contrôle (97) par réglage du dispositif de réglage du débit (51) dans le courant gazeux (11) restant après la séparation du chlore (36).

2. Procédé selon la revendication 1, **caractérisé en ce que** le courant gazeux (11) ou le gaz restant après le déchargement d'un courant partiel (12) du courant gazeux (11) est introduit dans une étape de procédé (38) pour l'épuration du gaz.

3. Procédé selon la revendication 1 ou 2, **caractérisé en ce qu'**un courant partiel supplémentaire (17) est déchargé à partir du courant gazeux (11) restant après la séparation du chlore (36), et comprimé dans une étape d'augmentation de la pression (39), puis introduit dans une étape de récupération du chlore (40), lors de laquelle le chlore contenu dans ce courant partiel comprimé (18) est séparé par distillation à température basse et introduit en tant que courant recyclé (19) dans la séparation du chlore (36), et le courant gazeux restant (20) est introduit dans le traitement du gaz d'échappement (37) ;
un dispositif de réglage du débit ajustable (54) est prévu dans la conduite du courant gazeux (20) restant après l'étape de récupération du chlore (40) ;
un appareil de mesure du débit massique (74) est prévu dans le courant partiel supplémentaire (17) qui est introduit dans l'étape d'augmentation de la pression (39) ;
un appareil de mesure de la pression (64) est prévu dans ou après l'étape de récupération du chlore (40), avant le dispositif de réglage du débit (54) pour le courant gazeux (20) restant après cette étape ;
l'unité d'augmentation de la pression (39) est prévue pour être réglable au regard de sa puissance ;
le courant partiel supplémentaire (17) est réglé par un huitième dispositif de contrôle (98) par réglage de la puissance de l'unité d'augmentation de la pression (39) de manière à ce que le courant partiel (12) décrit précédemment pour le traitement du gaz d'échappement (37) soit minimisé, et
la pression mesurée dans ou après l'étape de récupération du chlore (40) est maintenue constante par un neuvième dispositif de contrôle (99) par réglage du dispositif de réglage du débit (54).

4. Procédé selon l'une quelconque des revendications 1 à 3, **caractérisé en ce que** la concentration en oxygène est mesurée dans le courant gazeux (11) restant après la séparation du chlore ou dans le courant partiel (12) déchargé pour l'étape de traitement du gaz d'échappement ou dans le courant partiel supplémentaire (17) déchargé pour l'étape d'augmentation de la pression ou dans le courant (14) issu de l'étape d'épuration du gaz (38) ou dans le courant (16) après le rassemblement du courant (14) avec un courant (15) contenant de l'oxygène frais.

5. Procédé selon l'une quelconque des revendications 1 à 4, **caractérisé en ce que** la pression ajustée par la deuxième unité de contrôle (92) est de 2 à 20 bar,
la teneur en oxygène ajustée par la quatrième unité de contrôle (94) est de 10 à 90 % en volume,
la pression ajustée par la cinquième unité de contrôle (95) est de 2 à 20 bar,
et la pression ajustée par la septième unité de contrôle (97) est de 6 à 30 bar.

6. Procédé selon l'une quelconque des revendications 1 à 5, **caractérisé en ce qu'**un catalyseur de ruthénium, notamment un catalyseur à base de chlorure de ruthénium et d'oxyde d'étain en tant que matériau support, est utilisé dans l'étape d'oxydation (32).
